(19) Europäisches Patentamt
European Patent Office
Office européen des brevets

(11) **EP 4 645 144 A1**

(12) **EUROPEAN PATENT APPLICATION**

(43) Date of publication:
**05.11.2025   Bulletin 2025/45**

(21) Application number: **24382475.2**

(22) Date of filing: **30.04.2024**

(51) International Patent Classification (IPC):
**G06F 21/62** $^{(2013.01)}$     **H04W 12/02** $^{(2009.01)}$

(52) Cooperative Patent Classification (CPC):
**H04W 12/02; G06F 21/6254;** G06F 21/6245

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TELEFÓNICA IOT & BIG DATA TECH, S.A.**
**28050 Madrid (ES)**

(72) Inventors:
• **LLAMAS BALLESTERO, Agustín**
  **28050 MADRID (ES)**
• **GODOY OROZCO, Ana Maria**
  **28050 MADRID (ES)**
• **BARRACHINA VEGA, Ian-Paul**
  **28050 MADRID (ES)**

(74) Representative: **Herrero & Asociados, S.L.**
  **Edificio Aqua - Agustín de Foxá, 4-10**
  **28036 Madrid (ES)**

(54) **METHOD FOR IMPROVING DATA PROTECTION**

(57) A method for improving data protection in a dataset (100) to be k-anonymized. Postanonymization, the reidentification risk is assessed (1000) by calculating the maximum risk from individual assessments (1010). This includes: calculating the inverse of the k-anonymity level as the risk of individual reidentification (1000); assessing attribute reidentification (1200) by identifying repeated attribute aggregations (1220) in the dataset, thereby calculating a risk for each record (1230) and deducing the maximum risk for attribute disclosure (1240); and determining inference reidentification risk (1300) by fitting (1320) the appropriate probability distribution to each attribute, applying log-linear regression (1340) to the data divided into two parts, and estimating the regression's predictive accuracy (1350). A weighted risk based on this accuracy is then calculated (1360) and the highest risk value is obtained. The maximum of all these risks (1900) defines the aggregate reidentification risk (2000), output to be compared against a predefined risk threshold.

FIG. 1

EP 4 645 144 A1

**Description**

**TECHNICAL FIELD**

The present invention relates generally to computing systems and, specifically, used within the field of information security and data privacy technology.

More particularly, the present invention relates to an automated method designed for improving data protection by evaluating the risk of re-identification in anonymized datasets.

**BACKGROUND OF THE INVENTION**

When anonymized data is shared (whether with a client, a supplier, or made public) there is always the risk that the shared data can be analyzed and compared with other sources in such a way that information can be associated with specific people. It is possible to modify the anonymized data in such a way that makes this type of malicious analysis difficult, but this means delivering data that can deviate greatly from the real data. That is why it is necessary to obtain a balance between the quality of the data and the risk that malicious analysis may be performed.

There are many algorithms to modify the anonymized data to be shared and calculate the loss of accuracy, but it is also necessary to be able to calculate the risk that exists when delivering these data in order to reach the best possible balance.

There are guides by different regulatory national or international organizations (e.g., AEPD, CSIRO and PDPC, of which references are given in more detail below) describing which types of risk exist. The existing guides and regulations provide theoretical definitions of the types of risks associated with the re-identification of anonymized data. However, there is a notable absence of specific procedures or protocols for quantitatively assessing or estimating these risks in practical scenarios. That is why, although it is perfectly understood what the dangers are, these definitions do not serve to calculate in specific cases what exactly the level of risk is.

AEPD (Spanish Data Protection Agency / AEPD: "Agencia Española de Protección de Datos" in Spanish) is the institution in charge of regulating Data Protection regulations in Spain, as well as a guide with good practices, in which the types of risk that exist are mainly defined and the most appropriate acceptance thresholds for these risks are indicated. CSIRO (Commonwealth Scientific and Industrial Research Organization) is an Australian organization that has carried out research into the risks of re-identification. PDPC (Personal Data Protection Commission) is a Singapore commission that has established itself as one of the leaders in data protection and anonymization regulations. The aforementioned AEPD bases a large part of its regulations on the PDPC guidelines.

The Spanish Data Protection Agency (AEPD) indicates that there are several types of re-identification risk, and the following three fundamental types of risk are defined:

- Re-identification of an individual: Determine with a high level of confidence the identity of an individual described by a record. That is, a malicious user (attacker) is able to associate a person with a specific record, thus obtaining any information contained in the record that was previously unknown.
- Attribute disclosure: Determine with a high level of confidence that an attribute described in the dataset belongs to a specific individual. In this case, it is not necessary to know exactly the record belonging to a specific individual; it would be enough to know a set of attributes of the individual for which all records that have this specific combination always have the same value for one or more unknown attributes.
- Inferences disclosure: Make an inference with a high level of confidence about an individual. In this specific risk, it is not even necessary for the individual to be part of the data.

There is a deficiency in the existing guides and regulations to disclose or lead to a procedure or protocol of calculation or estimation of the defined types of risks, given a set of anonymized data.

Therefore, there is a need of providing an improved method for assessing the risk of re-identification in anonymized data.

**SUMMARY OF THE INVENTION**

The problems found in prior art techniques are generally solved or circumvented, and technical advantages are generally achieved, by the disclosed embodiments which provide an automated reliable method for enforcing and improving data protection by evaluating the risk of re-identification.

In the context of the invention, the risk of re-identification is defined as the danger that the provided data gives a malicious user information about a specific person that was previously unknown.

The present invention is a valuable integrated tool for organizations aiming to balance data utility with privacy concerns, which is based on algorithms that, given a set of data, can calculate the probabilistic risk that a malicious actor who has possession of this set of data (dataset) could reliably learn information about a specific person or people previously unknown. These algorithms are based on the principle of log-linear regression on the data, used in the inverse of the usual way to calculate risks (instead of adjustments). By calculating and so understanding the re-identification risks associated with datasets, it can be determined whether they meet the privacy requirements established by anonymization parameters that apply to the dataset based on its nature and the applicable regulation.

An aspect of the present invention refers to a method for improving data protection in datasets which comprises the steps defined by claim 1.

Another aspect of the invention relates to a computer program product comprising instructions that, when the program is executed by a computer, cause it to carry out the method defined above.

Another aspect of the invention relates to a computer-readable medium comprising instructions that, when executed by the computer, cause it to execute the method defined above.

The invention is defined by the independent claim. The dependent claims define advantageous embodiments.

The method in accordance with the above-described aspects of the invention has a number of advantages with respect to the aforementioned prior art, which can be summarized as follows:

- The prosed method is based on robust models and the application in reverse of the algorithms used by the model does not affect its robustness but gives them a new functionality that was not contemplated in the prior-art.
- The present invention allows the improvement of algorithms for data anonymization by optimizing the balance between data utility and privacy, as the proposed method can incorporate real-time risk assessment to dynamically adjust the anonymization process in order to more effectively balance the quality of the anonymized data with the risk of malicious re-identification.
- The present invention allows the automatization of the determination of risk acceptance thresholds based on a comprehensive analysis of the dataset, its intended use, and potential re-identification pathways, providing a more standardized and efficient approach to managing data privacy risks.
- The proposed method automatically adapts risk assessment techniques to meet the specific requirements of multiple jurisdictions. Thus, the present invention solves the technical challenge in developing a risk assessment process and data anonymization that is compliant across different regulatory environments and allows the integration of cross-jurisdictional data protection regulations as exemplified by AEPD, CSIRO, and PDPC) into anonymization processes.

## BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

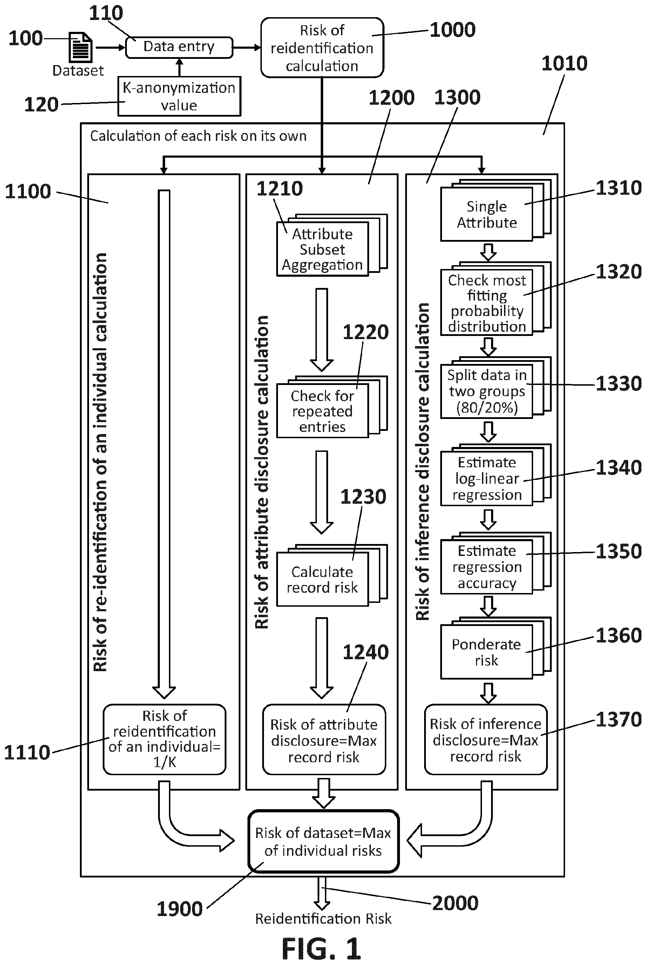

Figure 1 shows an overview flow diagram of the method for improving data protection by assessing the risk of re-identification in an anonymized dataset, according to a preferred embodiment of the invention.

## DESCRIPTION OF EMBODIMENTS

The present invention may be embodied in other specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

Figure 1 presents an overview of the method flow. Firstly, a dataset (100) is received as an input, the dataset (100) containing the data (110) to be anonymized using a determined value (k) of k-anonymity level (120). For this k-anonymized data entry, a maximum risk of reidentification is calculated (1000) as follows. The maximum risk of reidentification calculated for the input anonymized dataset (100) is an aggregate re-identification risk (1900) which is obtained by the method as the maximum value from among individual risks and delivered as an output (2000) to be compared with a defined target (an objective measure of such risk that defines a risk threshold). For this reidentification risk calculation (1000), each risk is calculated individually (1010) to obtain the maximum value and includes:

i) calculating a risk of individual re-identification (1100) as 1/k, i.e., the reciprocal (1110) of the given k-anonymity level;
ii) calculating a risk of attribute re-identification (1200) by checking (1220) if any combination/aggregation of subset of attributes (1210) of the dataset (100) has repeated entries and so conforms an attribute disclosure risk, a risk being calculated for each data record (1230) of the dataset (100) and finally the maximum of each record risk (1240) being calculated to obtain the risk of attribute re-identification or disclosure; and

iii) calculating a risk of inference re-identification (1300), which comprises determining the probability distribution most fitting (1320) for each single attribute (1310) of the dataset (100), calculating the predictor function that best describes the type of data (110) having the data split (1330) into two groups (e.g., 80/20 %) by applying a log-linear regression (1340) to each one of the two data groups, estimating the regression accuracy (1350) to check how accurate this predictor function is to predict data, calculating a weighted/ponderate risk (1360) based on the estimated accuracy, and finally the maximum of each ponderate risk is calculated (1370) to obtain the risk of inference re-identification.

The method defines the following measures of risks and intervals/thresholds for each one of the defined risks as follows:

i) Risk of re-identification of an individual or risk of individual re-identification (1100)

According to the AEPD, the probability of re-identification of an individual to a single record is:

$$P(link\ an\ individual\ to\ a\ record) = \frac{1}{record\ equivalency\ class\ size}$$

The "record equivalence class size" being the number of records exactly equal to the given record. Since this parameter is inversely proportional to the probability, the smaller the parameter, the greater the risk.

In the event that the data is k-anonymized (that is, all records with an equivalence class less than k are eliminated), there is a minimum of the equivalence class, and, hence, a maximum risk of the data:

$$Individual\ re-identification\ risk = \frac{1}{k-anonymization}$$

The maximum allowed risk determines the degree of required k-anonymization.

The AEPD indicates that the most common value for k is 5, and $k \geq 5$ in a k-anonymized dataset is considered as safe/secured data according to the AEPD. Therefore, assuming k = 5, the maximum risk that can be allowed is 1/5 = 20%. That is, if the maximum allowed risk is 20%, then k-anonymization greater than or equal to 5 is required.

ii) Risk of attribute disclosure or risk of attribute re-identification (1200)

All types of data are split into two large groups: personal data and non-personal data. The characteristics and types of personal data are defined taking into account that: if a datum does not have any of the characteristics defined in any of the described types of personal data, then it is considered as non-personal data.

That is, non-personal data: Data without any characteristics associated with personal data.

Personal data: Data belonging to one of four types of personal data defined as follows:

1- General personal data: data that serve to identify an individual, either directly or indirectly (as long as a disproportionate amount of effort or time is not necessary to identify the individual through this data). General personal data are:

Name and surname
ID
Address
Phone number

2- Special personal data: These are data referring to an individual that are especially sensitive, referring in this case to the fact that its improper knowledge by third parties may be, socially or economically, harmful to the individual. The following are considered special personal data:

Ethnic or racial origin
Political opinions
Religious or philosophical convictions
Union membership
Genetic data (those present in a DNA analysis)

Biometric data
Health data (physical or mental health, present, past and future estimates)
Data related to the life or sexual orientations of natural persons

3- Data on criminal infractions and convictions: All personal data on infractions and sentences issued by the public authority following the specific legislation of the country in which it was committed.
4- Personal data in legal vacuum: These are personal data that are not properly categorized at a legal level. For this methodology, these data are treated in the same way as special personal data, until such time as legislation places them in a specific category. The following are considered personal data in legal vacuum:

Affiliation (marriage, civil partnership, etc.)
Change of surnames in relation to domestic violence
Sex change

In addition, in order to calculate the risk of attribute disclosure, these factors/parameters associated with a type of data are defined in the context of the invention:

a) Interest: This parameter indicates the usefulness that an attribute or record may have for an attacker. A high interest indicates that said attribute or record is more valuable than another with a lower interest and therefore an attacker can expend greater effort to obtain it.

Thus, taking into account the types of data described above, a level of interest is assigned to each type of data, indicating the severity of the consequences of a third party being able to harm the individual thanks to knowing said data. The different levels of interest are:

Very Significant Interest: Knowledge of said data may cause irreversible physical, psychological, economic or reputational damage to the individual, or affect the exercise of fundamental rights and freedoms established in the country's legislation.
Significant Interest: Knowledge of said data may cause reversible physical, psychological, economic or reputational damage to the individual, loss of control over their personal data, possible identity theft or exposure of professional secrets.
Limited Interest: Knowledge of said data may cause a very limited loss of control over some personal data, incurring insignificant or reversible financial losses, or the loss of confidentiality of a professional secret that is not special or criminal.
Very Limited Interest: Knowledge of said data may cause the reversible loss of control of some personal data or the reversible loss of confidentiality of a professional secret.

The assignment of interest to each type of data is defined as follows:

Non-personal data - Very Limited Interest
General personal data - Limited Interest
Special personal data - Significant Interest
Personal data of violation or conviction - Very Significant Interest
Special data in legal vacuum - Significant Interest

b) Probability: This parameter indicates the possibility that an attacker may have previously obtained this attribute or record from some other source. A low probability indicates that said attribute or record is more difficult to obtain by other means than another with a higher probability and therefore it is less likely that an attacker will be able to know it in advance. The possible levels for probability are:

Very High Probability: There is evidence that the type of data has already been exposed on more than one occasion during the last year in different entities, or there are audits that indicate that the technology and/or processes that protect the type of data have important vulnerabilities.
High Probability: There is evidence that the type of data has been exposed at least once during the last year in some entity, or there are studies or audits that conclude that, due to new vulnerabilities or technologies that are not properly tested and certified, this data has a high probability of being compromised at any time.
Low Probability: There is evidence that the type of data has been exposed at least once in the last ten years in some entity.

Unlikely Probability: There is no evidence that the type of data has ever been exposed.

c) Vulnerable attribute: A vulnerable attribute is one whose value for a specific individual is initially unknown, but can be calculated thanks to the combination of other attributes that may be known by an attacker.

d) Required attribute: A necessary attribute is one which, on its own or in conjunction with other attributes, allows the value of a vulnerable attribute to be determined.

e) Dataset attributes: It is the set of all attributes that make up the given dataset.

f) Vulnerable record: Any record that contains one or more vulnerable attributes.

To assess the risk attribute disclosure, the SUDA (Special Unique Detection Algorithms) algorithm approach is used to exhaustively locate all those sets of attributes that may be vulnerable. To do this, it is necessary to assign a normalized numerical value (that is, between 0 and 1) to each level of interest and probability. To grant this value, it is determined that the interval between levels is the same to maintain objectivity, so the resulting values are the ones of Table 1:

**Table 1**

|  | Level | Numerical value |
|---|---|---|
| **Interest** | Very significant | 1 |
|  | Significant | 0.75 |
|  | Limited | 0.5 |
|  | Very limited | 0.25 |
| **Probability** | Very high | 1.00 |
|  | High | 0.75 |
|  | Low | 0.5 |
|  | Unlikely | 0.25 |

The operation of the proposed method follows these main steps to calculate an absolute risk:

- A subset of the attributes of the dataset is chosen (this process is repeated with all possible subsets of attributes that are not the complete set).
- Checking that, for the group of all records that share the same values of this attribute subset, there is no other attribute outside the subset that shares the same value for all records in this group.
- Performing this calculation with the data without k-anonymization, and subsequently eliminating all those records that would not appear thanks to k-anonymization. In this way, false positives do not appear for attributes that are not vulnerable, but appear to be vulnerable after k-anonymization.
- For each vulnerable record, the risk is directly proportional to the interest, and the difficulty negatively affects the risk (the more difficult, the lower the risk and therefore the complementary difficulty is obtained as 1 - difficulty). Therefore, the absolute risk is calculated as follows:

$$risk = interest \; x \; probability$$

where the value of interest is the ratio of the sum of the relative interest that each vulnerable attribute has with respect to the sum of the interest of all the attributes of the dataset.

$$record \; interest = \frac{\sum_{vulnerable \; attributes} attribute \; interest}{\sum_{dataset \; attributes} attribute \; interest}$$

Therefore, an interest equal to 1 means that all attributes of a record are vulnerable, which is equivalent to the risk of re-identification of an individual.

The probability is calculated in the same way, multiplying the probabilities of each of the attributes necessary for re-identification:

$$record\ probability = \prod_{neccesary\ attributes} attribute\ probability$$

Finally, it is necessary to take into account the number of individuals affected by this risk, and weight it depending on this number. To do this, this risk is multiplied by a weight that depends on the number of affected individuals (this weight is a continuous and increasing function in the interval from 0 to 1, such that f(0) = 0 and f($\infty$) = 1).

$$weight = 1 - \frac{1}{individuals + 1}$$

Then, the weighted risk for the disclosure of attributes of each record is:

$$weighted\ risk\ = risk \cdot weight$$

A maximum (allowed/acceptable) risk may be specified, which may depend on how sensitive the data contained in said record is.

For example, the Spanish Data Protection Agency (AEPD) indicates the maximum value allowed for this risk according to Table 2:

**Table 2**

| Sensitivity | Maximum risk |
|---|---|
| Low | 20% |
| Medium | 10% |
| High | 1% |

For the description of this algorithm the interest of the (calculated previously) record to define the maximum acceptable risk, based on the previous Table 2 described by the AEPD, is indicated in Table 3.

**Table 3**

| Interest | Maximum risk |
|---|---|
| Very limited | 20% |
| Limited | 10% |
| Significant | 1% |
| Very significant | 1% |

For example, if the sensitivity of the data is determined to be low, the maximum risk that can be allowed is 20% if the AEPD criteria are followed.

The attribute disclosure risk of the dataset is taken as the maximum of the attribute disclosure risks of all records in the dataset.

iii) Risk of inference disclosure or risk of inference re-identification (1300)

In order to calculate the inference disclosure risk, a log-linear regression algorithm is used to make predictions on the data, and check how accurate these predictions are. Regression algorithms are used to calculate a generalized function on the complete universe of data, taking as reference the reduced set of data provided. On the other hand, it is recommended that the type of regression be log-linear given that some of the data for this type of analysis may be qualitative. Various regression techniques for particular cases of specific data can be applied. The type of regression allows the inference of an attribute with relative statistical confidence, knowing the rest of the attributes of an individual, whether or not this individual belongs to the data provided in the dataset. It is for this reason that, when weighing this risk, the vulnerable attribute is taken as the target one to be obtained. It also taken into account that the affected individuals in this case is the entire population, so the weight, w, is taken as w=1.

To carry out this measurement the following steps are performed:

iii.1) Calculating the statistical distribution that best fits each attribute. That is, a log-linear regression is performed for each of the possible distributions. In each case, the method chooses the distribution in which the best results are obtained in the following sections:

- Minor deviation.

- Minor Pearson chi2.

- Minor R-Square.

iii.2) Splitting the data randomly into two groups, separating 80% of it to do the regression and the remaining 20% to check the accuracy. The regression is performed using the distribution that fit best in the previous step for the first group of data (the one containing 80%).

iii.3) Once the regression model is obtained, it is used to infer the data from the second group of data (the one containing 20%) and the estimated result is compared with the current result, thus obtaining a reliability metric (that is, what ratio of successes are obtained if compared to the total number of checks).

iii.4) The risk is adjusted according to the ratio of the number of correct answers previously calculated compared to the probability of correcting without having any prior data, i.e.,

$$\frac{1}{\text{possible values for the attribute}}$$

iii.5) The adjusted risk is weighted using the values for interest, difficulty and weight described above.

iii.6) It is possible that, after these calculations, the risk is negative because the adjustment has not been satisfactory. This means that, for an attacker, it is less useful to perform a regression than to randomly guess the data, and therefore, this means that the risk of this regression is 0%.

These risks (attribute disclosure risk and inference disclosure risk) depend on the sensitivity of the data. For this example, as for the example of the attribute disclosure risk, the method uses a maximum allowed risk of inference disclosure equal to 20%.

Finally, the method determines the aggregate re-identification risk of the whole dataset as the maximum of the three calculated risks (i.e., the maximum value is selected from among i) the calculated risk of an individual reidentification, ii) the calculated risk of attribute disclosure and iii) the calculated risk of inference disclosure), having a hierarchy of dataset types defined to make it easy to locate each dataset. Any type of hierarchy can be used as long as the final types contain the following properties:

- Aggregate: The name of the column header to be used to perform the aggregation.
- Deleted: A list of the headers of those columns to be eliminated from the analysis.
- Interests: A dictionary with all the columns (except those removed and the added one) and the particular interest of each of them.
- Difficulties: A dictionary with all the columns (except those removed and the one added) and the particular difficulty of each of them.

For the specific dataset, the method determines the dataset type to which the dataset belongs, and optionally considers the k-anonymity (by default k=1). During the loading process of the dataset, the number of possible different values of each attribute are also calculated. The following steps are then performed:

- Calculating the re-identification risk of an individual as 1/k.
- The risk of attribute re-identification is calculated, receiving a list of all records that have a unique combination of attributes. Subsequently and optionally, all records with an aggregation less than k are eliminated to eliminate false positives (if the data were previously k-anonymized, this step is irrelevant and elimination of false positives does not apply in this case).
- Determining how accurate the linear regression fit is by calculating the precision for all k-anonymities from k=1 to k=100, or optionally by calculating the precision for the pre-determined k-anonymity. For each of the attributes of the dataset:

- If the distribution of the data has not been previously calculated or indicated, all possible distributions are tested and the results are compared, choosing the one with the lowest deviation + chi2.
- For each of the k-anonymizations, a log-linear regression is performed with the chosen distribution, using only 80% of the data selected randomly, to obtain a predictor function adapted to the selected data and which can be used to make predictions on any other data. This predictor function is a mathematical computation that takes as entry variables every attribute but one (i.e., the function uses every attribute except one as input variables), and the result is the predicted value of this last attribute (i.e., the function outputs the predicted value of the omitted attribute)
- The accuracy of the predictor function is checked using the remaining data. To do this, an attempt is made to predict the result of this data using the predictor function, and the result is compared with the real value of the data, to calculate the precision as the percentage of correctness of this predictor function over the entire set of remaining data.

At this point, all the results of the absolute risks of the dataset (k-anonymization, the list of records with vulnerable attributes and the log-linear regression) are obtained and the next step is to weight the results in order to give a more realistic view of the real risk. This weighting step is performed as follows:

- Risk of re-identification of an individual: this risk is calculated on the entire dataset, so it does not need to be weighted.
- Risk of attribute re-identification: The maximum weighted risk is chosen for attribute re-identification.
- Risk of re-identification by inference: The maximum weighted risk is chosen for re-identification by inference.

For each of the three risks described above, a value of severity is indicated and compared to a severity threshold to specifically indicate whether the severity value is within what is allowed or whether it exceeds the severity threshold.

- Inference Risk: All inference risks are returned, indicating:

    - Absolute risk: The risk initially calculated using the precision of the fit.
    - Adjusted risk: the ratio of the risk compared to the probability of being correct at random.
    - Weighted risk: the weight of the adjusted risk with respect to the difficulty and interest of the specific attribute.
    - Distribution: the distribution indicated for the specific attribute. If no particular distribution has been initially forced, the distribution that best fits the data is selected to enhance the adaptability and precision of the risk assessment process. The valued statistical distributions which can be used are: Gaussian, Inverse Gaussian, Binomial, Negative Binomial, Gamma and Poisson.

- Attribute Re-identification Risk: All vulnerable records are returned, including those within the allowed limits.
- Risk of re-identification by inference.

In the event that all of the above risks are within the limits (risk thresholds) allowed for the dataset, the dataset is considered valid. Otherwise, the dataset can be modified and the method performs the assessment again on this modified dataset. The dataset can be modified using one or more of the techniques, depending on which risk or risks exceed the limit, the specific needs of the use to which the data in the dataset is intended and the impact on the quality of the data, as described below:

a. K-anonymize using a higher value: This measure decreases the quality of the data very little and influences the three risk measures, especially the risk of identification of an individual.
b. Eliminate vulnerable records: This measure completely reduces the risk of attribute re-identification but has very little influence on the risk of re-identification by inference and nothing on the risk of re-identification of an individual. The loss of data quality is minimal.
c. Eliminate vulnerable attributes: This measure greatly influences the risks of re-identification by inference and attribute re-identification but does not influence the re-identification risk of an individual. The impact on data quality is great.

If any of these combinations are within the permitted risk limits/ thresholds, the dataset is considered valid with the modifications and, otherwise, the dataset is considered invalid.

Therefore, the method provides criteria for validating (modified) datasets or declaring datasets invalid when risk mitigation is insufficient.

It is observed that:

○ The records vulnerable to an attribute disclosure are very few compared to the total number of records. Eliminating them all reduces this risk to 0.

○ It is always beneficial to perform analyzes with data without prior k-anonymization. This eliminates false positives and a more accurate calculation of risks. However, this same process can be carried out with partial data, being aware that the loss of precision is always conservative, that is, it will never give us a risk lower than the real one.

○ k-anonymization fully influences the risk of re-identification of an individual, but also greatly influences the risk of attribute disclosure. Greater k-anonymization reduces the number of vulnerable records. Despite this, removing only vulnerable records is preferable to increasing k, as risk is completely eliminated and data quality is reduced less.

○ In general, k-anonymity has very little influence on the risk of disclosure by inference. A higher k in general eliminates those records with more strange values, which would minimally increase the precision, and therefore the risk, until reaching a point with such a high k that the data is so deteriorated that the regression loses meaning.

The proposed method for improving data protection in datasets, via evaluating the risk of re-identification in anonymized data through the described statistical analysis, can be applied to any type of data (e.g., personal data, medical records, financial information) and can be used in different sectors/applications (e.g., healthcare, finance, social media data). The method utilizes specific metrics/standards to assess re-identification risk such as k-anonymity to address any anonymization technique applied to the dataset (e.g., data masking, pseudonymization, generalization).

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1.  A computer-implemented method for improving data protection in datasets, the method comprising receiving an input anonymized dataset (100) containing a list of data records associated with attributes, the method **characterized by** comprising the following steps executed by one or more processors:

    - for the input anonymized dataset (100), identifying a dataset type from a defined plurality of dataset types and determining a value k of k-anonymity level,
    - calculating an aggregate re-identification risk (1000) for the input anonymized dataset (100) based on the identified dataset type, calculating the aggregate re-identification risk (1000) comprising:

        - calculating a risk of individual re-identification (1100) as the reciprocal of the value k;
        - calculating a risk of attribute re-identification (1200) for the records having a unique combination of attributes and
        - calculating a risk of inference re-identification (1300) by a log-linear regression;

    and the aggregate re-identification risk (1000) being calculated as the maximum from among the calculated risk of individual re-identification (1100), risk of attribute re-identification (1200) and risk of interference re-identification (1300);
    - indicating that the input anonymized dataset (100) is valid if the calculated aggregate re-identification risk is below a risk threshold; otherwise,

        - modifying the input anonymized dataset,
        - recalculating the aggregate re-identification risk for the modified anonymized dataset, and
        - indicating that the modified anonymized dataset is valid if the recalculated aggregate re-identification risk is below the risk threshold; otherwise, indicating that the input anonymized dataset (100) is invalid.

2.  The method according to claim 1, wherein modifying the input anonymized dataset comprises at least one of the following steps: anonymizing the data using a value K>k of k-anonymity level, eliminating vulnerable records and eliminating vulnerable attributes.

3.  The method according to claim 2, wherein the vulnerable attributes are located by applying a special unique detection algorithm, SUDA.

4.  The method according to any preceding claim, the k-anonymity level is determined by setting the value k=1 by default.

5. The method according to any preceding claim, further comprising eliminating all the records with an aggregation less than the determined value k of k-anonymity level to eliminate false positives.

6. The method according to any preceding claim, wherein the plurality of dataset types is defined specifying criteria for aggregation, exclusion, interest, and difficulty of attributes for each dataset type.

7. The method according to any preceding claim, further comprising calculating a severity for each of the risk of individual re-identification, the risk of attribute re-identification and the risk of inference re-identification, and comparing the calculated severity against a severity threshold.

8. The method according to any preceding claim, wherein the risk of inference re-identification is calculated based on a risk prediction accuracy which is defined as a calculated precision value of the log-linear regression for at least the determined value of k-anonymity level, wherein calculating the precision value comprises:

   - selecting a statistical distribution with the lowest sum of deviation and chi-squared (chi2) values,
   - performing the log-linear regression for each level of k-anonymization using the selected distribution to develop a predictor function;
   - comparing predicted data from the predictor function with real data from the received data records,
   - calculating the precision value as the percentage of predicted data that matches real data in the comparison.

9. The method according to any preceding claim, wherein the statistical distribution used for risk prediction accuracy is selected from Gaussian, Inverse Gaussian, Binomial, Negative Binomial, Gamma, and Poisson.

10. A computer program product comprising instructions that, when the program is executed by a computer, cause the computer to carry out the method of claims 1-9.

11. A computer-readable medium comprising instructions that, when executed by a computer, cause the computer to carry out the method of claims 1-9.

FIG. 1

**EUROPEAN SEARCH REPORT**

Application Number

EP 24 38 2475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CARVALHO TÂNIA ET AL: "Survey on Privacy-Preserving Techniques for Microdata Publication", ARXIV.ORG, CORNELL UNIVERSITY LIBRARY, 201 OLIN LIBRARY CORNELL UNIVERSITY ITHACA, NY 14853, vol. 55, no. 14s, 17 July 2023 (2023-07-17), pages 1-42, XP059156269, DOI: 10.1145/3588765 | 1-6,8-11 | INV. G06F21/62 H04W12/02 |
| Y | * figures 1-2; table 1 *  * page 5 - page 13 *  * page 29 - page 30 *  ----- | 7 | |
| Y | US 2021/049282 A1 (DI VALENTINO DAVID NICHOLAS MAURICE [CA] ET AL) 18 February 2021 (2021-02-18) * figures 1-8 * * paragraph [0006] * * paragraph [0064] - paragraph [0076] *  ----- | 7 | |
| A | US 2022/300651 A1 (MONDAL SUTAPA [IN] ET AL) 22 September 2022 (2022-09-22)  ----- | 1-11 | TECHNICAL FIELDS SEARCHED (IPC)  G06F H04W |
| A | Hundepool Anco ET AL: "Handbook on Statistical Disclosure Control Version 1.01 Anco Hundepool", Handbook on Statistical Disclosure Control, Version 1.01, 1 March 2017 (2017-03-01), pages 1-208, XP093025341, Retrieved from the Internet: URL:https://citeseerx.ist.psu.edu/document ?repid=rep1&type=pdf&doi=1e6aa70faf3e1f7c8 1ecaee63dd7466f1d490fe0 [retrieved on 2023-02-20]  ----- | 1-11 | |

The present search report has been drawn up for all claims

| Place of search | Date of completion of the search | Examiner |
|---|---|---|
| Munich | 28 May 2024 | Shibli, Kamel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 38 2475

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | Publication date |
|---|---|---|---|
| US 2021049282 A1 | 18-02-2021 | CA 3089835 A1 | 12-02-2021 |
| | | EP 3779757 A1 | 17-02-2021 |
| | | US 2021049282 A1 | 18-02-2021 |
| US 2022300651 A1 | 22-09-2022 | EP 4060543 A1 | 21-09-2022 |
| | | US 2022300651 A1 | 22-09-2022 |

EPO FORM P0459

For more details about this annex : see Official Journal of the European Patent Office, No. 12/82